(19) Europäisches Patentamt
European Patent Office
Office européen des brevets

(11) **EP 4 526 706 B1**

(12) **FASCICULE DE BREVET EUROPEEN**

(45) Date de publication et mention
de la délivrance du brevet:
**19.11.2025 Bulletin 2025/47**

(21) Numéro de dépôt: **23726984.0**

(22) Date de dépôt: **15.05.2023**

(51) Classification Internationale des Brevets (IPC):
*G01S 13/931* (2020.01)   *G01S 17/931* (2020.01)
*G06N 7/00* (2023.01)   *G06V 20/58* (2022.01)
*G01S 7/48* (2006.01)   *G01S 17/89* (2020.01)
*G01S 17/58* (2006.01)   *G06N 7/01* (2023.01)

(52) Classification Coopérative des Brevets (CPC):
**G01S 13/931; G01S 7/4802; G01S 7/4808;
G01S 17/58; G01S 17/89; G01S 17/931;
G06N 7/01; G06V 10/25; G06V 10/764;
G06V 10/84; G06V 20/58**

(86) Numéro de dépôt international:
**PCT/EP2023/062963**

(87) Numéro de publication internationale:
**WO 2023/222597 (23.11.2023 Gazette 2023/47)**

(54) **PROCEDE ET SYSTEME DE PERCEPTION DE CORPS MATERIELS A BALAYAGE OPTIMISE**

VERFAHREN UND SYSTEM ZUR WAHRNEHMUNG PHYSIKALISCHER KÖRPER MIT OPTIMIERTER ABTASTUNG

METHOD AND SYSTEM FOR PERCEIVING PHYSICAL BODIES, WITH OPTIMIZED SCANNING

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **17.05.2022 FR 2204651**

(43) Date de publication de la demande:
**26.03.2025 Bulletin 2025/13**

(73) Titulaire: **Commissariat à l'Energie Atomique et
aux Energies
Alternatives
75015 Paris (FR)**

(72) Inventeurs:
• **FRESNEAU, Aurélien
38054 Grenoble Cedex 09 (FR)**
• **PUSCHINI PASCUAL, Diego
38054 Grenoble Cedex 09 (FR)**

(74) Mandataire: **Atout PI Laplace
Immeuble Up On
25 Boulevard Romain Rolland
CS 40072
75685 Paris Cedex 14 (FR)**

(56) Documents cités:
**EP-A1- 3 364 213     EP-A1- 3 968 219**

• **TIANA RAKOTOVAO ANDRIAMAHEFA: "Integer
Occupancy Grids : a probabilistic multi-sensor
fusion framework for embedded perception", 21
February 2017 (2017-02-21), XP055615155,
Retrieved from the Internet <URL:https://tel.
archives-ouvertes.fr/tel-01680375/document>**

**Description**

L'invention porte sur un procédé et un système de perception et d'estimation de la position - et optionnellement de la vitesse - de corps matériels dans un environnement, utilisant un ou plusieurs capteurs de distance tels que, par exemple, des radars, des lidars ou des sonars.

On entend par « corps matériel » toute substance ou objet matériel présentant une individualité et pouvant être détecté et identifié par un capteur approprié. Ainsi, sont considérés des corps matériels les objets inanimés, qu'ils soient naturels ou artificiels, les végétaux, les animaux, les êtres humains, mais aussi des particules liquides ou solides en suspension dans l'air, comme les nuages, voire des masses liquides ou gazeuses.

L'invention s'applique notamment au domaine de la navigation de robots, drones, véhicules autonomes, etc. et plus généralement à celui de la perception.

Avec l'explosion des moyens de calcul intégrables dans un robot, les applications de la robotique se sont multipliées ces dernières années, de la production industrielle à la domotique, de l'exploration spatiale et sous-marine aux drones-jouets grand public. Les tâches réalisées dans les applications robotiques se sont progressivement complexifiées, impliquant de plus en plus souvent pour les robots de pouvoir évoluer dans des environnements inconnus ; cela a rendu de plus en plus important le développement de moyens et techniques de perception, c'est-à-dire permettant la découverte et l'interprétation de l'espace environnant. Une application importante qui utilise la perception en robotique est la navigation, qui consiste à fixer un objectif de destination à un robot, et de le laisser s'y rendre en prenant soin d'éviter les obstacles inconnus et potentiellement mobiles ; le robot a alors la charge de planifier lui-même sa trajectoire. Un exemple typique, faisant l'objet de recherches intenses, est la voiture autonome.

Il existe deux principales familles de techniques de perception : les méthodes géométriques, qui visent à identifier la géométrie des objets de l'espace environnant, et celles à base de grille d'occupation, qui visent à déterminer si un certain emplacement est occupé par un obstacle (plus généralement, par un corps matériel). L'invention relève des techniques à base de grille d'occupation.

Les fondements théoriques des méthodes de perception basés sur des grilles d'occupation probabilistes sont décrits dans l'article de A. Elfes, « Occupancy grids: a stochastic spatial representation for active robot perception » (Sixth Conference on Uncertainty in AI, 1990**).**

Une grille d'occupation probabiliste est constituée d'un agencement régulier - généralement bidimensionnel mais pouvant aussi être tridimensionnel - de cellules $c_i$ représentant chacune une petite région d'espace et caractérisée par une probabilité d'occupation $P(o(c_i)$, où $P(.)$ représente la probabilité d'un évènement et $o(c_i)$ l'évènement « la cellule $c_i$ est occupée par un corps matériel ». Les probabilités d'occupation sont calculées à partir des résultats z de mesures de distance, ce qui nécessite la connaissance d'un « modèle inverse » du capteur de distance, $P(o(c_i)|z)$, où $P(a|b)$ est la probabilité de l'évènement a conditionnée à la réalisation de l'évènement b. En général, plusieurs mesures de distance, effectuées par un seul capteur ou par plusieurs capteurs d'un même type ou de types différents contribuent à la détermination des probabilités d'occupation des cellules $c_i$ au moyen d'une opération connue sous le nom de « fusion bayésienne », car elle exploite le théorème de Bayes. Soient $z_1$ et $z_2$ deux mesures de distance ; la probabilité d'occupation de la cellule $c_i$ vaut donc

$$P(o_i|z_1, z_2) = \frac{[1-P(o_i)]P(o_i|z_1)P(o_i|z_2)}{[1-P(o_i)]P(o_i|z_1)P(o_i|z_2)+P(o_i)P(v_i|z_1)P(v_i|z_2)} \qquad (1)$$

Où « $o_i$ » est une notation raccourcie pour $o(c_i)$, « $v_i$ » est l'évènement « la cellule $c_i$ n'est pas occupée » et $P(o_i)$ la probabilité d'occupation a priori - c'est-à-dire avant toute mesure - de ladite cellule. Souvent on prend $P(o_i)=0,5$ pour toutes les cellules de la grille, mais cela n'est pas toujours le cas : par exemple EP 3 364 213 décrit un procédé dans lequel les probabilités d'occupation a priori sont choisies en fonction d'un contexte.

Une application directe de la méthode décrite par A. Elfes nécessite de nombreux calculs en virgule mobile et exige donc des ressources importantes en termes de puissance de calcul, qui sont difficilement compatibles avec les contraintes propres aux systèmes embarqués. WO2017/050890 décrit un procédé de perception de corps matériels à grille d'occupation pouvant être mis en œuvre uniquement au moyen de calculs entiers, et donc particulièrement bien adapté à des applications embarquées en temps réel.

La détermination du modèle inverse d'un capteur de distance est, en général, un problème difficile. Souvent, dans un souci de simplification, cela est fait dans le cadre de l'approximation de « cible unique », dans laquelle on considère que, à tout moment, le capteur ne détecte qu'un seul corps matériel au plus. Cette approximation est généralement raisonnable dans le cas de capteurs présentant une région de détection étroite (typiquement de quelques degrés). EP 3 594 719 décrit une approche permettant de dépasser cette approximation et de calculer le modèle inverse d'un capteur à large angle de détection.

Pour mettre en œuvre un des procédés mentionnés plus haut il est nécessaire de disposer d'un ensemble de capteurs dont les régions de détection couvrent l'intégralité de l'environnement dans lequel les corps matériels doivent être perçus ou - plus communément - un ou plusieurs capteurs présentant une région de détection plus ou moins large, effectuant un balayage de l'environnement selon une séquence d'acquisition. La solution la plus simple est d'effectuer un balayage uniforme, par exemple au moyen d'un capteur monté sur une tourelle rotative. Cette solution n'est cependant pas optimale car elle oblige à effectuer un compromis entre la résolution spatio-temporelle de la détection et les ressources employées. Des schémas d'acquisition plus complexes permettent de surmonter en partie cet inconvénient, en échantillonnant plus finement ou plus fréquemment des régions de l'espace considérées plus « intéressantes » que d'autres.

Par exemple US10598788 décrit un système de détection utilisant un Lidar dont l'angle de visée est contrôlable, par exemple au moyen d'une matrice de micro-miroirs. Des tirs laser additionnels sont intercalés au sein d'une liste de tirs préétablie de manière à densifier l'échantillonnage dans certaines régions d'intérêt. Le système permet également de contrôler la puissance des tirs de manière à uniformiser la puissance laser envoyée dans chaque région de l'espace, et à éventuellement protéger certaines cibles vulnérables à la puissance du laser.

WO2019216937 décrit un système de détection utilisant un Lidar dont l'angle de visée est contrôlable, par exemple au moyen d'une matrice de micro-miroirs, le système comprenant également une caméra intégrée à l'optique de réception du Lidar et ayant le même champ de vue sans parallaxe. La caméra permet de détecter une menace ou anomalie et la notifier à un système de planification de mouvement qui vient insérer des tirs additionnels à la liste de tirs préétablie, à très faible latence, de manière à améliorer très rapidement la perception des régions identifiées comme menaces.

Ces approches - qui ne sont pas spécifiques à la détection par grille probabiliste d'occupation - permettent d'améliorer la résolution spatio-temporelle de la détection de corps matériels pour des ressources données, ou de réduire le besoin de ressources (énergétiques, de calcul...), mais pas de manière optimale. L'invention vise à apporter une amélioration additionnelle, dans le contexte spécifique des méthodes à grille probabiliste d'occupation.

Conformément à l'invention, ce but est atteint grâce à une adaptation dynamique de la largeur de la région de détection d'un capteur de distance orientable. Aussi, le capteur est piloté de telle sorte qu'une région de détection étroite soit utilisée pour échantillonner finement des « régions d'intérêt » de l'environnement, tandis qu'une région de détection plus large est utilisé pour échantillonner plus grossièrement, mais plus rapidement, d'autres régions de l'environnement. Les régions d'intérêts sont extraites de la grille d'occupation construite à partir de mesures plus anciennes. Optionnellement, l'orientation de la région de détection du capteur est également adaptée de manière adaptative, par exemple pour revenir plus fréquemment sur les régions d'intérêt ou, plus simplement, pour tenir compte des variations de largeur de la région de détection du capteur, de manière à éviter des « trous » dans le balayage de l'environnement.

Ainsi, un objet de l'invention est un procédé de perception de corps matériels dans un environnement comportant les étapes suivantes, mises en œuvre de manière itérative par un ordinateur ou un circuit électronique numérique dédié :

a) Pilotage, selon une séquence d'acquisition, d'un capteur présentant une région de détection orientable dans l'environnement pour acquérir une pluralité de mesures de distance desdits corps matériels ;
b) Application, à chaque dite mesure de distance, d'un modèle inverse du capteur correspondant sur une grille d'occupation fournissant une représentation spatiale discrétisée d'un environnement dudit capteur, pour déterminer une probabilité d'occupation par un corps matériel d'un ensemble de cellules de ladite grille d'occupation ; et
c) Construction d'une grille d'occupation consolidée dont chaque cellule présente une probabilité d'occupation calculée par fusion bayésienne des probabilités d'occupation estimées lors de l'étape b) ;

caractérisé en ce que la région de détection du capteur présente une largeur angulaire variable et en ce que le procédé comprend également les étapes suivantes :

d) Identification, à partir de ladite grille d'occupation, d'au moins une région d'intérêt de l'environnement ; et
e) Détermination d'une dite séquence d'acquisition définissant, pour chaque mesure de distance, au moins l'orientation et la largeur angulaire de la région de détection du capteur, au moins les largeurs angulaires étant déterminées à partir de la ou des régions d'intérêt identifiées lors de l'étape d), ladite séquence d'acquisition étant utilisée dans l'étape a) d'une itération ultérieure du procédé
dans lequel la séquence d'acquisition déterminée lors de l'étape e) est adaptée pour échantillonner la ou des régions d'intérêt ou leurs contours, soit avec une résolution spatiale et/ou temporelle plus élevée que le reste de l'environnement, soit avec une résolution spatiale et/ou temporelle plus faible que le reste de l'environnement.

Selon des modes de réalisation particuliers d'un tel procédé :

- Lors de l'étape e), les orientations de la région de détection du capteur peuvent être également déterminées à partir de la ou des régions d'intérêt identifiées lors de l'étape d).
- L'étape c) peut comprendre aussi la construction d'une grille de mouvement à partir d'une évolution dans le temps des probabilités d'occupation des cellules de la grille d'occupation, et l'étape d) comprendre l'identification d'au moins une région d'intérêt de l'environnement également à partir de la grille de mouvement.

- Le capteur peut être adapté pour fournir également des mesures de vitesse des corps matériels, lesdites mesures de vitesse étant utilisées par l'étape d) d'identification d'au moins une région d'intérêt de l'environnement.

- La séquence d'acquisition déterminée lors de l'étape e) peut être adaptée pour échantillonner la ou des régions d'intérêt ou leurs contours avec une résolution spatiale et/ou temporelle plus élevée que le reste de l'environnement.

- Chaque dit modèle inverse de capteur peut être un modèle discret, associant à chaque cellule de la grille d'occupation correspondante, et pour chaque mesure de distance, une classe de probabilité choisie à l'intérieur d'un même ensemble de cardinalité finie, chaque dite classe de probabilité étant identifiée par un indice entier ; et dans lequel, lors de ladite étape c), la probabilité d'occupation de chaque cellule de la grille d'occupation consolidée est déterminée au moyen de calculs entiers effectués sur les indices des classes de probabilités déterminées lors de ladite étape b).

- Le modèle inverse du capteur peut être stocké dans une mémoire sous la forme d'une structure de donnée représentent une pluralité de grilles, dites grilles de modèle, associées à des mesures de distance possibles respectives et à des largeurs angulaires possibles respectives de la région de détection, au moins certaines cellules d'une grille de modèle correspondant à une pluralité de cellules contiguës de la grille d'occupation appartenant à un même secteur angulaire parmi une pluralité de secteurs angulaires dans laquelle la région de détection du capteur est subdivisée, et associant une même probabilité d'occupation à chacune de ces cellules.

- L'étape c) peut comporter la construction de la grille d'occupation consolidée également à partir de mesures de distance issues d'un ou plusieurs capteurs auxiliaires.

Un autre objet de l'invention est un système de perception de corps matériels comprenant :

- au moins un port d'entrée pour recevoir une pluralité de signaux représentatifs de mesures de distance desdits corps matériels issues d'un ou plusieurs capteurs ;

- un module de traitement de données configuré pour recevoir en entrée lesdits signaux et les utiliser pour construire une grille d'occupation consolidée et déterminer une séquence d'acquisition en appliquant un procédé tel que ci-dessus;

- un premier port de sortie pour un signal représentatif de la grille d'occupation ou de la ou des régions d'intérêt ; et

- un second port de sortie pour un signal représentatif de la séquence d'acquisition.

Un tel système peut comprendre également un ou plusieurs capteurs de distance adaptés pour recevoir dudit second port de sortie ledit signal représentatif de la séquence d'acquisition et pour fournir audit ou auxdits ports d'entrée des signaux représentatifs d'une pluralité de mesures de distance de corps matériels.

Le ou au moins un capteur de distance peut être de type radar, lidar ou sonar et comprendre un système de formation de faisceau pour contrôler l'orientation et la largeur angulaire d'un faisceau de rayonnement électromagnétique ou acoustique définissant la région de détection.

D'autres caractéristiques, détails et avantages de l'invention ressortiront à la lecture de la description faite en référence aux dessins annexés donnés à titre d'exemple et qui représentent, respectivement :

[Fig.1], reproduite de WO2017/050890 avec des modifications, une illustration de la notion de grille d'occupation ;

[Fig. 2], également reproduite de WO2017/050890, une illustration de la notion de modèle « direct » d'un capteur de distance ;

[Fig. 3], également reproduite de WO2017/050890, une illustration de la notion de modèle « inverse » d'un capteur de distance ;

[Fig. 4], également reproduite de WO2017/050890, une illustration de la notion de discrétisation spatial d'un modèle inverse sur une grille d'occupation ;

[Fig. 5], également reproduite de WO2017/050890, une illustration de deux méthodes de quantification d'un modèle inverse d'un capteur sur une grille d'occupation

[Fig. 6] et [Fig. 7], reproduites de EP 3 594 719, des illustrations de la notion de « décomposition sectorielle » utilisée pour calculer le modèle inverse d'un capteur à large angle de détection ;

[Fig. 8], un schéma de principe d'un procédé et un système selon un mode de réalisation de l'invention ; et

[fig. 9], une illustration de l'adaptation dynamique de la largeur de détection d'un capteur de distance.

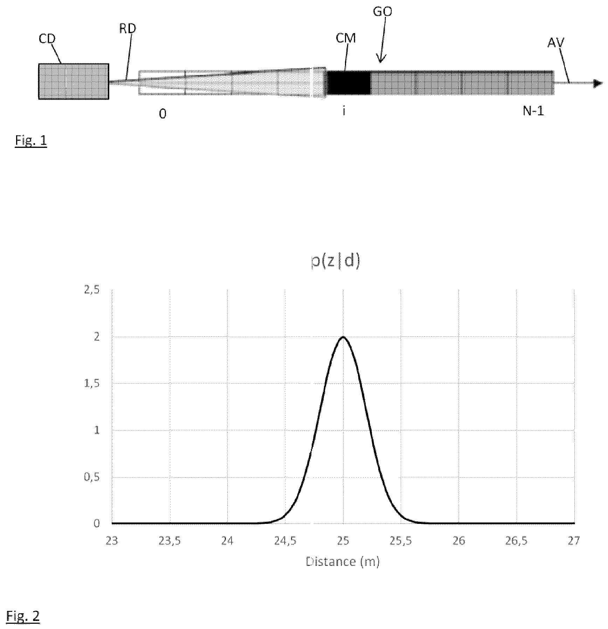

La [Fig.1] illustre schématiquement une configuration dans laquelle un capteur de distance CD, présentant une région de détection RD étroite, modélisable par un cône d'un demi-angle d'ouverture -5° centré autour d'un axe de visée AV, est utilisé pour mesurer la distance d'un corps matériel CM situé le long de l'axe de visée.

Soit d la distance réelle entre le corps matériel et le capteur de distance CD, et z la sortie du capteur. Du fait de l'inévitable incertitude de mesure, pour une valeur donnée de d, la valeur de z sera une variable aléatoire caractérisée par la fonction de densité de probabilité conditionnelle p(z|d) qui modélise la relation entre la position réelle d'une cible et son estimation vue par le capteur ("modèle direct").

La [Fig. 2] présente un exemple de modèle direct d'un capteur de distance ; on considère un espace linéaire de 50 m de long et on suppose qu'une cible est située à d = 25 m du capteur. Pour un capteur avec une erreur modélisable par une fonction gaussienne, la réponse la plus probable z sera voisine de 25 m, mais d'autres valeurs seront possibles, avec une densité de probabilité définie par la courbe. Dans le cas d'un capteur idéal, p(z|d)=$\delta$(z-d), où $\delta$ est une fonction delta de Dirac, et la mesure serait toujours égale à la vraie distance. Le modèle direct d'un capteur peut être déterminé de manière expérimentale ; typiquement il peut être construit à partir de données fournies par le constructeur (dans le cas gaussien, la valeur de l'écart-type suffit à caractériser le modèle).

Une grille d'occupation GO est une partition d'une région continue et délimitée de l'espace en un nombre N de parties, appelées cellules et désignées par un indice $i \in [0, N - 1]$. La cellule d'indice i est indiquée par ci. Uniquement pour illustrer les concepts de modèles directs et inverses, la présente discussion se limitera au cas d'une grille d'occupation unidimensionnelle observée par un seul capteur de distance CD (ou une pluralité de capteurs co-localisés), l'indice i augmentant au fur et à mesure que les capteurs s'éloignent ($c_0$ étant donc la cellule la plus proche du capteur et $c_{N-1}$ la plus éloignée), ce qui correspond à la configuration illustrée par la [Fig. 1].

Une mesure z issue d'un capteur permet de déterminer la probabilité d'occupation $P(o_i|z)$ d'une cellule ci. Pour une mesure z donnée, l'ensemble des probabilités $P(o_i|z) \forall i \in [0, N - 1]$ constitue le modèle inverse du capteur sur la grille. Alors que le modèle direct du capteur renseigne sur la réponse du capteur en fonction du monde physique, le modèle inverse exprime l'impact de la mesure sur la grille d'occupation qui est le modèle du monde physique que l'on adopte, ce qui justifie l'appellation modèle inverse.

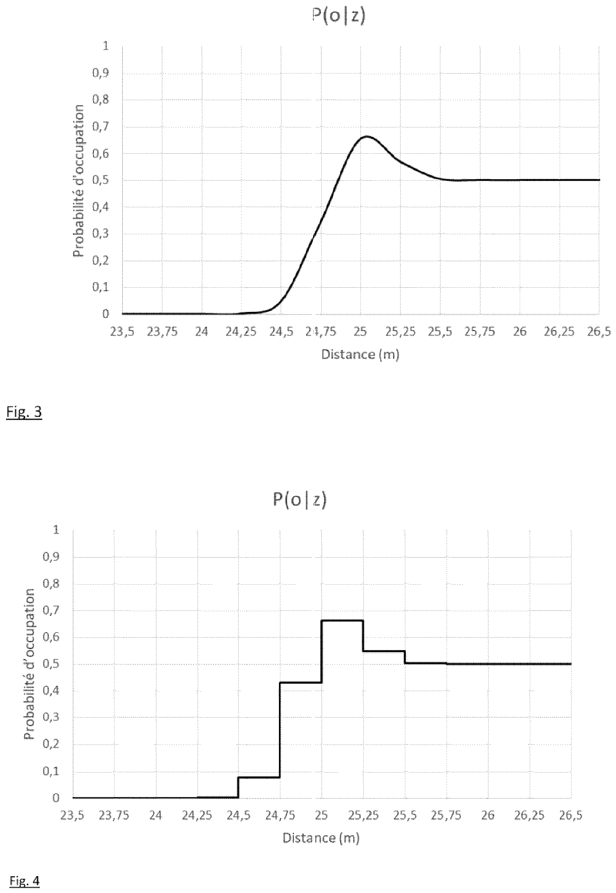

La [Fig. 3] présente un exemple typique de modèle inverse d'un capteur de distance, dans un cas où z=25m. On peut vérifier que la probabilité d'occupation est quasi-nulle pour les cellules qui se trouvent à une distance inférieure à 24,25 m du capteur et atteint un pic pour une distance de 25 m (correspondant à la mesure fournie par le capteur). Au-delà de 25 m, la probabilité d'occupation diminue jusqu'à se stabiliser à une valeur de 0,5, indicative d'une méconnaissance totale de l'état d'occupation des cellules qui, étant situées au-delà de l'obstacle, sont masquées par ce dernier et donc inaccessibles au capteur.

La [Fig. 3] représente le modèle inverse au moyen d'une courbe lissée, mais une représentation plus correcte serait de n'afficher que les points correspondant aux limites des cellules de la grille : en effet, on ne peut pas distinguer une cellule « partiellement » occupée d'une autre qui le serait « totalement », dans tous les cas la distance à l'obstacle sera estimée comme étant la distance à la cellule correspondante. C'est là l'erreur spatiale introduite par la grille.

Une version plus juste du modèle inverse de la [Fig. 3], tenant compte de cette discrétisation spatiale induite par la grille est présentée sur la [Fig. 4].

Le modèle inverse de la [Fig. 4] est discrétisé spatialement, mais la probabilité d'occupation de chaque cellule peut prendre n'importe quelle valeur réelle comprise dans l'intervalle [0,1]. En pratique, dans une mise en œuvre numérique, les valeurs de probabilité doivent également être quantifiées, selon un schéma de quantification uniforme ou non uniforme. Comme expliqué en détail dans WO2017/050890, certains schémas de quantification particuliers, non uniformes, permettent une simplification drastique des calculs nécessaires pour « fusionner » ensemble - c'est-à-dire combiner - les informations fournies par plusieurs mesures de distance issues d'un même capteur ou de capteurs différents.

La quantification des probabilités d'occupation consiste à représenter l'intervalle [0 ; 1] de manière discrétisée, par l'intermédiaire de « classes de probabilités » identifiées par des indices entiers. Plus précisément, on appelle « système de classes de probabilités » $S = \{p_n, n \in \mathbb{Z}\}$ un sous-ensemble dénombrable de [0; 1], dont les éléments $p_n$ peuvent donc être caractérisés par un indice entier relatif « n ». Si on appelle « F » la fonction de fusion des données exprimée par l'équation (1) ci-dessus, on peut écrire, dans le cas $P(o_i)$=0,5 :

$$F(p_1, p_2) = \frac{p_1 p_2}{p_1 p_2 + (1 - p_1)(1 - p_2)} \qquad (2).$$

La génération au cas où $P(o_i)$ n'est pas nécessairement égal à 0,5 ne pose pas de difficulté de principe et est étudié en détail dans EP3364213.

Un cas particulièrement intéressant est celui d'un système de classes tel que le résultat de la fusion de deux classes de probabilités du système appartient également au système ; formellement : $\forall p_i, p_j \in S, F(p_1, p_2) \in S$. On parle alors d'un système de classes « sans erreur », car la fusion n'introduit pas d'erreur ou d'approximation. Il est donc possible de repérer les valeurs de probabilité par les indices des classes correspondantes, et le résultat d'une fusion est également identifié par un indice. Le problème de la fusion bayésienne revient alors à déterminer une fonction appropriée $F_d$ qui, à deux indices entiers, associe un autre indice entier. Formellement :

$$\forall (k, l) \in \mathbb{Z}^2, \exists\, i \in \mathbb{Z} : F(p_k, p_l) = p_i \tag{3}$$

et on note $F_d(k, 1) = i$.

Le calcul de $F_d(k,l)$ ne requiert que la connaissance des indices k et l et de l'arithmétique d'indice entier ; aucun calcul en virgule flottante n'est nécessaire pour le calcul de la fusion des informations $p_k$ et $p_l$. De plus, si le système de classes est considéré, l'indice obtenu à l'aide de $F_d(k,l)$ désigne une valeur de probabilité strictement identique à celle obtenue - en utilisant des nombres en virgule flottante - en appliquant l'équation (1). La méthode permet ainsi la fusion des classes de probabilité sans erreur par rapport à un calcul flottant.

Un premier exemple de système de classes sans erreur peut être défini par récurrence.

Soit p une probabilité d'occupation strictement comprise entre 0,5 et 1 : $0,5 < p < 1$. On définit alors par récurrence la suite $p_n$ de la façon suivante :

$$p_0 = 0,5 \; ;$$

$$p_1 = p \; ;$$

$$p_2 = F(p,p);$$

$$p_3 = F(p_2,p);$$

$$...$$

$$p_{n+1} = F(p_n, p)$$

On étend ensuite la définition de $p_n$ aux valeurs entières négatives de n de la façon suivante : $p_0 = 0,5$ ;

$$p_{-1} = 1 - p \; ;$$

$$p_{-2} = F(p_{-1}, p_{-1});$$

$$p_{-3} = F(p_{-2}, p_{-1});$$

$$...$$

$$p_{n-1} = F(p_n, p_{-1})$$

Dans les définitions des classes $p_i$, la fonction F est définie par l'équation (2).

On définit ensuite les deux systèmes de classes suivants, de paramètre $p \in\; ]0,5, 1[$ :

$$G_p^+ = \{(p_n), n \geq 0\}$$

$$G_p^- = \{(p_n), n \leq 0\}$$

Par constructions, les systèmes de classes $G_p^-$ et $G_p^+$ sont sans erreur. En outre, $G_p = G_p^- \cup G_p^+$ définit un nouveau système de classes qui peut directement être utilisé pour réaliser une fusion bayésienne, et qui peut être démontré sans erreur sur tout son ensemble de définition.

Une autre possible schéma de discrétisation permettant d'effectuer la fusion bayésienne avec uniquement des calculs entiers consiste à utiliser le système de classes $S_k = S_k^+ \cup S_k^-$, où où

$$S_k^- = \left\{ \frac{1}{2 - k \cdot n}, n \le 0 \right\}$$

$$S_k^+ = \left\{ \frac{k \cdot n + 1}{k \cdot n + 2}, n \ge 0 \right\}$$

où k est un entier positif $(k \in \mathbb{N}^*)$. L'inconvénient de cette approche est que si $S_k^+$ et $S_k^-$ sont effectivement "sans erreurs", tel n'est pas la cas de $S_k$.

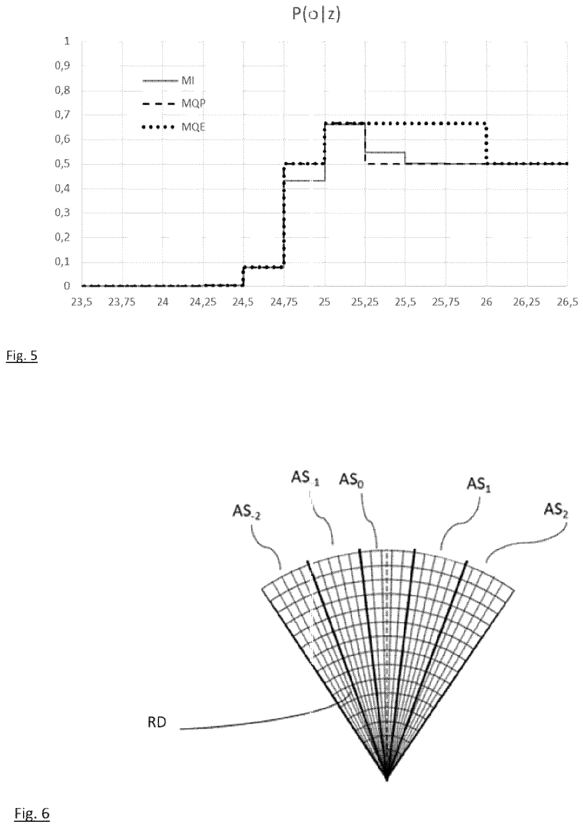

Pour quantifier un modèle inverse déjà discrétisé spatialement il est possible de remplacer les valeurs du modèle inverse - représenté par la courbe MI sur la [Fig. 5] - par les éléments du système discret de classes de probabilité S les plus proches, de manière à minimiser l'erreur de quantification. Le résultat, dans le cas où le système de classes de probabilité est $S_1$ ($S_k$ avec k=1) est représenté par la courbe MQP sur cette même [Fig. 5]. On voit que cette approche peut conduire à sous-estimer la probabilité d'occupation d'une cellule, ce qui peut ne pas être acceptable dans une application de détection d'obstacles. Une alternative consiste à approcher les valeurs du modèle inverse théorique par le plus petit majorant du système de classes S (courbe MQE sur la [Fig. 5], toujours dans le cas du système $S_1$). Ainsi la probabilité d'occupation n'est jamais sous-estimée, ce qui peut être un avantage pour la détection d'obstacles. Dans d'autres applications, comme le comptage de personne, ce type d'approximation peut en revanche conduire à la génération de faux-positifs.

Jusqu'ici seul le cas d'un capteur de distance à région de détection étroite a été considéré, pour lequel la probabilité que plusieurs corps matériels se trouvent simultanément dans la région de détection, à une même distance du capteur, est négligeable. Dans le cas d'un capteur à région de détection de largeur supérieure à quelques degrés cette hypothèse n'est généralement plus satisfaite. Tenir compte de la possibilité d'avoir plusieurs corps matériels à une même distance du capteur (avec une tolérance inférieure à la résolution spatiale de la grille d'occupation) complique la détermination du modèle inverse. En effet il est possible de démontrer que cette détermination nécessite le calcul d'une somme de termes correspondant chacun à une configuration possible de la grille d'occupation ; dans le cas d'une grille d'occupation bidimensionnelle (contrairement au cas unidimensionnel de la [Fig. 1]), ce nombre devient vite très grand.

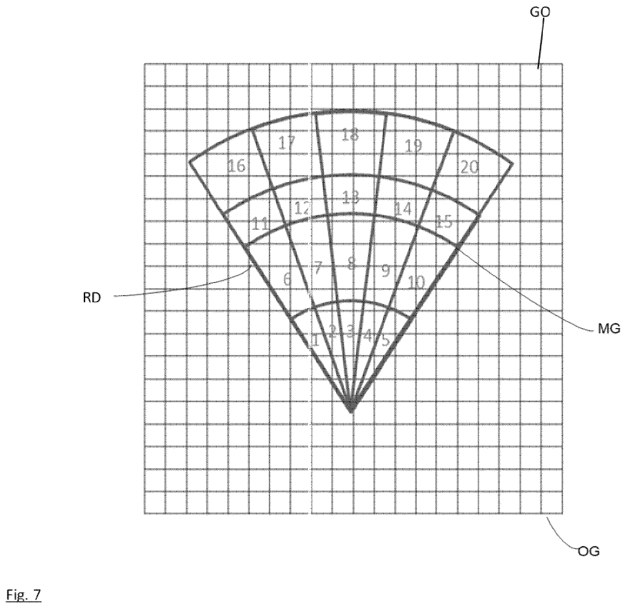

Comme expliqué dans EP 3 594 719, et illustré sur la [Fig. 6] il est avantageux de décomposer une région de détection « large » RD en une pluralité de secteurs angulaires $AS_{-2}$, $AS_{-1}$, $AS_0$, $AS_1$, $AS_2$ - de préférence de même largeur angulaire et en nombre impair. Comme illustré sur la [Fig. 7], une « grille de modèle » MG de géométrie polaire est définie sur la région de détection ; cette grille correspond à la décomposition angulaire de la [Fig. 7] à laquelle s'ajoute une décomposition radiale relativement grossière par rapport à la résolution spatiale de la grille d'occupation GO ; aussi, en général, plusieurs cellules de la grille d'occupation correspondent à une même cellule de la grille de modèle.

Le modèle inverse du capteur est constitué d'une pluralité de grilles de modèle du type de la [Fig. 7], associées à des mesures de distance respectives. Une probabilité conditionnée d'occupation P(o|z) est associée à chaque cellule de chaque grille de modèle. Ces probabilités sont calculées en considérant comme équivalentes toutes les configurations de la grille d'occupation comprenant au moins une cellule occupée appartenant à une même cellule de la grille de modèle.

En soi, une grille d'occupation contient uniquement une information de position d'un ou plusieurs corps matériaux à un instant donné. En comparant des grilles d'occupation à des instants différents, cependant, il est également possible d'estimer les déplacements desdits corps matériels, qui peuvent être représentées par une « grille de déplacements », ou « grille dynamique », dont chaque cellule occupée par un corps matériel contient une information de vitesse dudit corps matériel. Des capteurs de vitesse peuvent également être utilisés pour construire une telle grille de déplacements, ou contribuer à sa construction.

Comme mentionné plus haut, l'invention apporte un perfectionnement à ces techniques de perception de l'environnement, qui consiste à adapter de manière dynamique la largeur de la région de détection du capteur tout en variant l'orientation de son axe de visée, de manière à réaliser un échantillonnage non-uniforme de l'environnement. Les mesures de distance acquises par le capteur sont utilisées pour construire un modèle de l'environnement basé sur une grille d'occupation ; à son tour, ce modèle est utilisé pour planifier les mesures ultérieures, en particulier en identifiant des régions qui doivent être échantillonnées de manière plus ou moins fine.

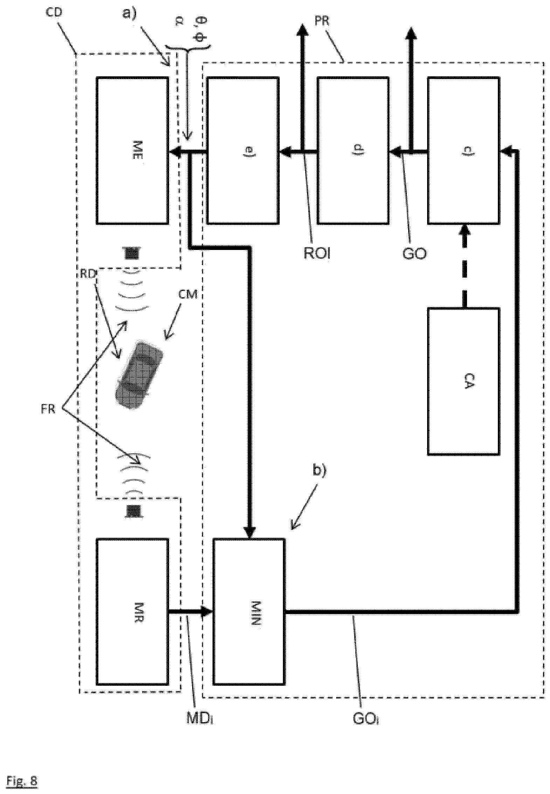

Un mode de réalisation de l'invention sera maintenant décrit en détail, avec référence à la [Fig. 8].

Un système selon l'invention comprend essentiellement un capteur de distance CD et un processeur PR. Le terme « processeur » sera utilisé ici pour définir un système de traitement des données, comprenant par exemple un ou plusieurs microprocesseurs et/ou circuits électroniques numériques programmés ou configurés de manière opportune et interconnectés pour coopérer entre eux et avec le capteur. Le processeur PR peut être par exemple intégré au capteur, être distinct de ce dernier ou comporter des composants intégrés au capteur, destinés à piloter ce dernier et/ou à effectuer des premières opérations sur les données de mesure et un ou plusieurs composants extérieurs, destinés à effectuer des opérations de plus haut niveau. Le terme « ordinateur » sera utilisé pour désigner tout processeur programmable, et ne désigne pas nécessairement un ordinateur générique.

Le capteur de distance CD comprend un module d'émission ME et un module de réception MR. Le module d'émission ME génère un faisceau de rayonnement FR dont l'angle polaire $\theta$ (ou colatitude, ou angle zenithal) et/ou l'angle azimutal (ou longitude) $\varphi$, ainsi que l'angle d'ouverture $\alpha$, peuvent être contrôlés par le processeur PR. Le faisceau de rayonnement définit ainsi une région de détection RD orientable et de largeur modifiable. Le module de réception MR détecte une portion du rayonnement diffusée par un corps matériel CM situé dans la région de détection RD. Dans la [Fig. 8] les modules d'émission et de réception sont situés de part et d'autre du corps matériel ; en réalité, dans la plupart des modes de réalisation, ils seront co-localisés.

Par exemple, le capteur CD peut être un capteur à temps de vol, notamment de type lidar. Encore plus particulièrement, il peut s'agir d'un lidar à onde continue modulée en fréquence (FMCW de l'anglais « Frequency-Modulated Continuous-Wave »). Dans ce cas, le module d'émission peut comprendre un émetteur laser et l'optique de génération de faisceau associée, et le module de réception un photodétecteur avec le système optique et les circuits électroniques associés. Pour permettre une reconfiguration « agile » du faisceau, et donc de la région de détection, l'optique de génération de faisceau du module d'émission pourra, de manière préférentielle, comprendre un réseau phasé optique (OPA, de l'anglais « Optical Phased Array »), qui permet de contrôler l'orientation et la largeur du faisceau de manière électronique/optique, sans parties - ou sans parties macroscopiques, dans le cas d'un OPA de type micro-opto-électro-mécanique - en mouvement. Optionnellement, l'énergie du faisceau peut également être contrôlée. En variante, le capteur pourra être de type radar ou sonar. L'utilisation d'une tourelle rotative pour orienter la région de détection est possible mais non optimale car elle manque d'agilité (l'angle azimutal évolue de manière continue et ne peut donc pas être contrôlé librement ; en outre, pour éviter des « trous » dans le balayage il serait nécessaire d'adapter de manière dynamique la vitesse de rotation à la largeur du faisceau, ce qui est très difficile).

Dans une étape a) du procédé de la [Fig. 8], le capteur CD est piloté par le processeur PR pour acquérir des mesures de distance. Lorsqu'une nouvelle mesure de distance $MD_i$ (« i » étant un indice entier permettant d'identifier une mesure spécifique dans une série de N>1 mesures de distance) est acquise par le capteur, la donnée de la mesure et les informations de configuration du faisceau $\theta$, $\varphi$, $\alpha$) sont traitées par le processeur PR afin de construire une grille d'occupation $GO_i$ (étape b)). Pour cela, le processeur utilise un modèle inverse MIN du capteur tenant compte de la largeur angulaire du faisceau FR, par exemple du type décrit dans EP3594719. La grille d'occupation $GO_i$ est ensuite fusionnée (fusion bayésienne) avec une grille d'occupation consolidée GO, construite à partir des mesures précédemment acquises et modélisant l'environnement, par exemple en utilisant l'algorithme décrit en détail dans WO2017/050890 et EP3364213, qui a été rappelé plus haut (étape c)). En complément, les données de mesure peuvent être utilisées pour construire une ou plusieurs grilles dynamiques.

Des données issues d'un ou plusieurs capteurs auxiliaires CA peuvent également coopérer à la construction de la grille d'occupation consolidée, également par fusion bayésienne. Les capteurs auxiliaires peuvent être des capteurs de distance ou de vitesse tels des lidars, sonars, radars, caméras stéréo etc.

Avantageusement, la fusion bayésienne des données de mesure est complétée par un « facteur d'oubli » : avant la fusion avec la grille d'occupation $GO_i$, la grille d'occupation consolidée GO, issue des mesures $MD_j$ j = 0 ... i-1, subit un traitement qui rapproche la probabilité d'occupation de chaque cellule de la valeur 0,5, qui correspond à un état parfaitement inconnu. Ainsi, on donne plus de poids à l'information la plus récente. Ceci est particulièrement important dans le cas où les corps matériels et/ou le capteur sont mobiles.

Ensuite, lors d'une étape d), le processeur analyse la grille d'occupation consolidée GO et, le cas échéant, la ou les grilles dynamiques pour identifier une ou plusieurs « régions d'intérêt » ROI de l'environnement. Une région d'intérêt est une région de l'environnement qui présente un intérêt particulier et doit donc être échantillonnée plus finement et/ou plus fréquemment que d'autres régions - ou, inversement, une région qui est prédéfinie comme « vide » ou « de moindre intérêt » peut être échantillonnée plus grossièrement et/ou moins fréquemment. Les critères permettant d'identifier une zone d'intérêt peuvent être diverses et dépendent de l'application spécifique considérée. Par exemple, l'identification des régions d'intérêt peut se baser sur des gradients de distance mesurée, des gradients de vitesse des corps matériels détectés (si une grille dynamique est utilisée en plus des grilles d'occupation), la densité spatiale desdits corps, une

**EP 4 526 706 B1**

variation temporelle des probabilités d'occupation, etc. Il est aussi possible de prendre en compte le temps écoulé depuis la dernière fois qu'une zone de l'environnement a été visitée et/ou considérer « d'intérêt » les régions dans lesquelles la probabilité d'occupation des cellules est proche de 0,5 (ce qui signifie que leur état est inconnu). Dans certains modes de réalisation, il est également possible d'appliquer des méthodes d'intelligence artificielle pour identifier des objets - par exemple des véhicules - et considérer les régions occupées par ces objets comme des régions d'intérêts.

Les régions d'intérêt ROI peuvent être représentées de différentes manières. Une première possibilité (« format pixel ») consiste à créer une grille présentant le même format que la grille d'occupation, mais dont les valeurs des cellules représentent un niveau d'intérêt. Par exemple, on peut imaginer que les cellules correspondant à une région d'intérêt prennent une valeur « 1 » et les autres une valeur « 0 ». On peut également utiliser plusieurs niveaux d'intérêt différents, par exemple : « 0 » pour les cellules qui n'appartiennent pas à une ROI, « 1 » pour les cellules d'une ROI d'une première catégorie, « 2 » pour les cellules d'une ROI d'une deuxième catégorie et ainsi de suite. Une seconde possibilité (« format objet ») consiste à définir une ROI par une position (par exemple celle de son centre), sa forme et orientation, sa taille, et optionnellement son niveau d'intérêt.

Dans une étape e) le processeur PR détermine, à partir des ROI ainsi identifiées, une séquence d'acquisition de mesures qui se présente sous la forme d'une liste de commandes définissant, pour chaque mesure, l'angle polaire (colatitude) $\theta$ et/ou l'angle azimutal (longitude) $\varphi$, ainsi que l'angle d'ouverture $\alpha$ du faisceau, et optionnellement son énergie. Différents critères peuvent être utilisés pour construire la séquence d'acquisition. En particulier, l'angle d'ouverture $\alpha$ est différent pour les régions d'intérêt et pour le reste de l'environnement - typiquement, il est plus petit dans les régions d'intérêt pour assurer un échantillonnage spatial plus fin. S'il y a plusieurs catégories de régions d'intérêt, il y pourra y avoir des valeurs respectives de l'angle d'ouverture $\alpha$ - typiquement, $\alpha$ sera d'autant plus petit que le niveau d'intérêt de la ROI sera élevé. En outre, la périodicité des mesures pourra être différente pour les régions d'intérêt et pour le reste de l'environnement - typiquement, les ROI feront l'objet de mesures plus fréquentes que le reste de l'environnement pour assurer un échantillonnage temporel plus fin. Par exemple on peut imaginer un échantillonnage temporel uniforme de l'environnement (toute région fait l'objet d'une mesure tous les « T » secondes) auquel s'ajoutent des mesures additionnelles visant uniquement les régions d'intérêt. S'il y a plusieurs catégories de régions d'intérêt, les ROI présentant un niveau d'intérêt plus élevé pourront faire l'objet de mesures plus fréquentes que celles d'un niveau d'intérêt moins élevé.

Les commandes constituant la séquence d'acquisition sont utilisées par le processeur pour piloter le capteur CD, et notamment son module d'émission (étape a), à nouveau, le procédé étant itératif). Elles sont également utilisées pour choisir le modèle inverse de capteur approprié, qui sera utilisé pour construire la grille d'occupation $GO_i$ correspondant à chaque mesure. A ce propos, on remarque que la modélisation du capteur peut être de type continu ou discret. Dans une modélisation continue, la valeur de l'angle d'ouverture de faisceau peut être choisie arbitrairement et est modélisée comme telle. Cela demande de recalculer le modèle à la volée à chaque nouvelle ouverture. Cette option nécessite plus de ressources de calcul mais est plus précise. Dans une modélisation discrète, un nombre prédéfini de modèles inverses correspondant à des valeurs données de l'angle d'ouverture sont calculés préalablement est stocké dans une mémoire du processeur. Cette option est plus rapide en temps de calcul, mais est soit moins précise, soit permet moins d'ouvertures de faisceaux.

Plusieurs données produites à différents moments du procédé peuvent être fournies en sortie du système. Il peut s'agir par exemple de la grille d'occupation consolidée GO, d'une modélisation de l'environnement de type « nuage de point » construite à partir de GO, d'une liste des ROI, des données de mesure brutes issues des capteurs, etc.

Dans un mode de réalisation particulier de l'invention, le capteur de distance CD est un lidar FMCW dont l'ouverture angulaire et la direction du faisceau sont contrôlables grâce à un OPA en ajustant le déphasage de chacune des voies de ce dernier. Plus particulièrement, l'OPA fait varier l'angle azimutal $\varphi$ par pas discrets en tenant compte des variations de largeur du faisceau d'un « tir » à l'autre pour réaliser un balayage de l'environnement sans trous ni recouvrement des régions de détections correspondant à des « tirs » successifs. Selon un premier mode de réalisation l'angle polaire (ou colatitude) $\theta$ est maintenu constant, ce qui conduit à un balayage bidimensionnel. En variante, l'OPA peut être utilisé pour faire varier l'angle polaire $\theta$ afin de réaliser un balayage tridimensionnel. Il est également possible de faire varier $\theta$ en montant l'OPA sur un support de type poutre vibrante, ou encore d'utiliser plusieurs OPA empilés pour réaliser des balayages bidimensionnels dans des plans parallèles à des hauteurs différentes.

Dans un souci de simplicité, on considère le cas où l'OPA peut être piloté de manière à réaliser deux ouvertures angulaires différentes du faisceau du lidar : $\alpha_0$ et $2\alpha_0$, mais une généralisation à un plus grand nombre d'ouvertures angulaires ne pose pas de difficultés.

ILe capteur acquiert une série de mesures de distance correspondant à des directions de visée ($\varphi,\theta$) différentes de manière à effectuer un balayage de ladite couche de l'environnement. Si on ne met pas en œuvre l'approche adaptative de l'invention, l'utilisateur du système à un choix entre deux alternatives. Soit il utilise la plus faible ouverture angulaire pour maximiser la résolution, mais cela conduit à un nombre d'acquisition égal à $2\pi/\alpha_0$ (supposé entier) pour chaque tour. Cela peut obliger à limiter la cadence des tirs pour ne pas dépasser la puissance de calcul du processeur, limitant donc la résolution temporelle, ou à utiliser un processeur plus puissant et donc plus cher et plus consommateur d'énergie. Soit il utilise la plus grande ouverture angulaire, mais au prix d'une baisse de résolution spatiale qui peut conduire à perdre des détails importants. Il y a donc un compromis entre résolution spatiale et résolution temporelle.

L'invention permet d'utiliser la résolution spatiale la plus élevée (ouverture angulaire $\alpha_0$) seulement là où c'est vraiment nécessaire, c'est-à-dire en correspondance de régions d'intérêt identifiées au moyen d'un critère opportun, et la résolution spatiale la plus faible (ouverture angulaire $2\alpha_0$) de manière à réduire le nombre d'acquisitions et donc augmenter leur cadence.

Selon un mode de réalisation de l'invention, un critère d'identification des régions d'intérêt se base sur les écarts entre deux mesures de distance successives, correspondant à des régions adjacentes de l'environnement. Si cet écart, désigné par « d » dépasse un seuil « $d_s$ », on peut considérer que le capteur est en train d'explorer le contour d'un objet, ou un objet dont la surface forme un angle important avec l'axe de visée. Dans les deux cas, il est opportun d'utiliser l'ouverture angulaire $\alpha_0$ de manière observer les contours avec précision. Dans les autres cas, on considère que la perte de précision est acceptable si l'on remplace deux « tirs » consécutifs d'ouverture angulaire $\alpha_0$ par un seul tir d'ouverture angulaire $2\alpha_0$ et dont l'axe de visée coïncide avec la bissectrice des directions des deux tirs remplacés.

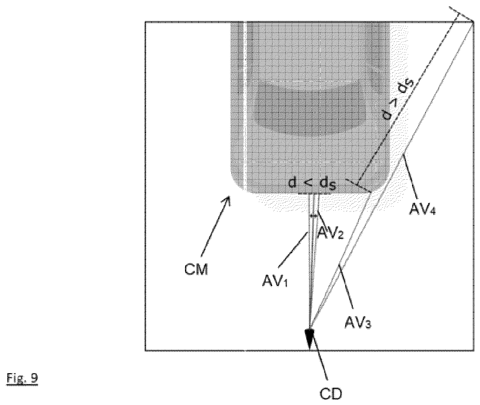

Cela est illustré par la [Fig. 9], où l'un peut voir une première paire de tirs - représentés par les axes de visée $AV_1$, $AV_2$ des faisceaux lidar correspondants - permettant de mesurer la distance de la face arrière d'une voiture (corps matériel CM) du capteur CD, et une deuxième paire de tirs - également représentés par les axes de visée $AV_3$, $AV_4$ des faisceaux lidar correspondants - échantillonnant le bord de ladite face arrière, c'est-à-dire la transition entre le bord arrière et le côté du véhicule. La différence d entre les deux mesures de distance effectuée le long des directions $AV_1$ et $AV_2$ est faible, très inférieure au seuil $d_S$. Par conséquent, lors des acquisitions successives, la région correspondante de l'environnement sera échantillonnée de manière relativement grossière, au moyen de faisceaux lidar d'ouverture angulaire $2\alpha_0$. Au contraire, la différence d entre les deux mesures de distance effectuée le long des directions $AV_3$ et $AV_4$ est importante, supérieure au seuil $d_S$. Par conséquent, lors des acquisitions successives, la région correspondante de l'environnement sera considérée une région d'intérêt et sera échantillonnée finement, au moyen de faisceaux lidar d'ouverture angulaire $\alpha_0$.

Dans cet exemple, le choix des régions d'intérêts dictant la politique de ciblage est uniquement basé sur les écarts de distance entre tirs successifs mais, comme expliqué plus haut, le module de sélection des régions d'intérêt peut prendre des formes beaucoup plus complexes, en se basant par exemple sur des données sémantiques de la scène, ou en priorisant les régions de l'espace où la connaissance de l'environnement est la plus incertaine grâce à l'approche des grilles d'occupation.

Dans cet exemple, l'OPA du capteur a été utilisé pour faire varier l'angle azimutal $\varphi$ de manière monotone (bien que non uniforme, le pas de variation de $\varphi$ dépendant de la largeur du faisceau en correspondance de chaque tir), de telle sorte que tous les points de l'environnement sont échantillonnés à une même cadence. Il est également possible d'utiliser l'OPA pour varier l'orientation de la région de détection de manière « agile », en échantillonnant les différentes régions de l'espace au moment le plus opportun.

Comme cela a été mentionné plus haut, un balayage mécanique au moyen d'une tourelle rotative est envisageable mais présente des inconvénients notables par rapport à l'utilisation d'un OPA. Un mode de réalisation hybride, combinant orientation mécanique et au moyen de l'OPA est également possible afin d'obtenir un champ de vision à 360°, ce qui n'est pas possible avec un OPA seul.

**Revendications**

1. Procédé de perception de corps matériels (CM) dans un environnement comportant les étapes suivantes, mises en œuvre de manière itérative par un ordinateur ou un circuit électronique numérique dédié (PR) :

   a) Pilotage, selon une séquence d'acquisition, d'un capteur (CD) présentant une région de détection (RD) orientable dans l'environnement pour acquérir une pluralité de mesures de distance ($MD_i$) desdits corps matériels ;
   b) Application, à chaque dite mesure de distance, d'un modèle inverse (MIN) du capteur correspondant sur une grille d'occupation ($GO_i$) fournissant une représentation spatiale discrétisée d'un environnement dudit capteur, pour déterminer une probabilité d'occupation par un corps matériel d'un ensemble de cellules de ladite grille d'occupation ; et
   c) Construction d'une grille d'occupation consolidée (GO) dont chaque cellule présente une probabilité d'occupation calculée par fusion bayésienne des probabilités d'occupation estimées lors de l'étape b) ;

   **caractérisé en ce que** la région de détection du capteur présente une largeur angulaire variable ($\alpha$) et **en ce que** le procédé comprend également les étapes suivantes :

d) Identification, à partir de ladite grille d'occupation, d'au moins une région d'intérêt (ROI) de l'environnement ; et

e) Détermination d'une dite séquence d'acquisition définissant, pour chaque mesure de distance, au moins l'orientation ($\varphi$, $\varphi$) et la largeur angulaire ($\alpha$) de la région de détection du capteur, au moins les largeurs angulaires étant déterminées à partir de la ou des régions d'intérêt identifiées lors de l'étape d), ladite séquence d'acquisition étant utilisée dans l'étape a) d'une itération ultérieure du procédé ;

dans lequel la séquence d'acquisition déterminée lors de l'étape e) est adaptée pour échantillonner la ou des régions d'intérêt (ROI) ou leurs contours, soit avec une résolution spatiale et/ou temporelle plus élevée que le reste de l'environnement, soit avec une résolution spatiale et/ou temporelle plus faible que le reste de l'environnement.

2. Procédé selon la revendication 1 dans lequel, lors de l'étape e), les orientations de la région de détection (RD) du capteur (CD) étant également déterminées à partir de la ou des régions d'intérêt (ROI) identifiées lors de l'étape d).

3. Procédé selon l'une des revendications précédentes dans lequel l'étape c) comprend aussi la construction d'une grille de mouvement à partir d'une évolution dans le temps des probabilités d'occupation des cellules de la grille d'occupation, et l'étape d) comprend l'identification d'au moins une région d'intérêt (ROI) de l'environnement également à partir de la grille de mouvement.

4. Procédé selon l'une des revendications 1 ou 2 dans lequel le capteur est adapté pour fournir également des mesures de vitesse des corps matériels, lesdites mesures de vitesse étant utilisées par l'étape d) d'identification d'au moins une région d'intérêt (ROI) de l'environnement.

5. Procédé selon l'une des revendications précédentes dans lequel chaque dit modèle inverse de capteur (MIN) est un modèle discret (MQP, MQE), associant à chaque cellule de la grille d'occupation ($GO_i$) correspondante, et pour chaque mesure de distance ($MD_i$), une classe de probabilité choisie à l'intérieur d'un même ensemble de cardinalité finie, chaque dite classe de probabilité étant identifiée par un indice entier ; et dans lequel, lors de ladite étape c), la probabilité d'occupation de chaque cellule de la grille d'occupation consolidée (GO) est déterminée au moyen de calculs entiers effectués sur les indices des classes de probabilités déterminées lors de ladite étape b).

6. Procédé selon l'une des revendications précédentes dans lequel le modèle inverse du capteur (MIN) est stocké dans une mémoire sous la forme d'une structure de donnée représentent une pluralité de grilles, dites grilles de modèle, associées à des mesures de distance possibles respectives et à des largeurs angulaires possibles respectives de la région de détection, au moins certaines cellules d'une grille de modèle correspondant à une pluralité de cellules contiguës de la grille d'occupation appartenant à un même secteur angulaire parmi une pluralité de secteurs angulaires ($AS_1$ - $AS_4$) dans laquelle la région de détection (RD) du capteur (CD) est subdivisée, et associant une même probabilité d'occupation à chacune de ces cellules.

7. Procédé selon l'une des revendications précédentes dans lequel l'étape c) comporte la construction de la grille d'occupation consolidée également à partir de mesures de distance issues d'un ou plusieurs capteurs auxiliaires (CA).

8. Système de perception de corps matériels (CM) comprenant :

- au moins un port d'entrée pour recevoir une pluralité de signaux représentatifs de mesures de distance ($MD_i$) desdits corps matériels issues d'un ou plusieurs capteurs ;
- un module de traitement de données (PR) configuré pour recevoir en entrée lesdits signaux et les utiliser pour construire une grille d'occupation consolidée (GO) et déterminer une séquence d'acquisition en appliquant un procédé selon l'une des revendications 1 à 7 ;
- un premier port de sortie pour un signal représentatif de la grille d'occupation (GO) ou de la ou des régions d'intérêt (ROI) ; et
- un second port de sortie pour un signal représentatif de la séquence d'acquisition ($\alpha$,$\theta$,$\varphi$).

9. Système selon la revendication 8 comprenant également un ou plusieurs capteurs de distance (CD) adaptés pour recevoir dudit second port de sortie ledit signal représentatif de la séquence d'acquisition et pour fournir audit ou auxdits ports d'entrée des signaux représentatifs d'une pluralité de mesures de distance de corps matériels.

10. Système selon la revendication 9 dans lequel le ou au moins un capteur de distance est de type radar, lidar ou sonar et comprend un système de formation de faisceau pour contrôler l'orientation et la largeur angulaire d'un faisceau de rayonnement électromagnétique ou acoustique définissant la région de détection.

**Patentansprüche**

1. Verfahren zur Wahrnehmung physischer Körper (CM) in einer Umgebung, die folgenden Schritte beinhaltend, die iterativ von einem Computer oder einer zweckgebundenen digitalen elektronischen Schaltung (PR) umgesetzt werden:

   a) Ansteuern, gemäß einer Erfassungssequenz, eines Sensors (CD), der einen in der Umgebung ausrichtbaren Detektionsbereich (RD) aufweist, um eine Vielzahl von Abstandsmessungen ($MD_i$) der physischen Körper zu erfassen;
   b) Anwenden, bei jeder Abstandsmessung, eines inversen Modells (MIN) des entsprechenden Sensors auf einem Belegungsraster ($GO_i$), der eine diskritisierte räumliche Darstellung einer Umgebung des Sensors bereitstellt, um eine Belegungswahrscheinlichkeit durch einen physischen Körper einer Zellenanordnung des Belegungsrasters zu bestimmen; und
   c) Aufbauen eines konsolidierten Belegungsrasters (GO), von dem jede Zelle eine durch Bayes'sche Fusionsmethodik der im Schritt b) geschätzten Belegungswahrscheinlichkeiten berechnete Belegungswahrscheinlichkeit aufweist;
   **dadurch gekennzeichnet, dass** der Detektionsbereich eine variable Winkelbreite ($\alpha$) aufweist und dadurch, dass das Verfahren auch die folgenden Schritte umfasst:

   d) Identifizieren aus dem Belegungsraster mindestens eines Bereichs von Interesse (ROI) der Umgebung; und
   e) Bestimmen einer Erfassungssequenz, die für jede Abstandsmessung mindestens die Ausrichtung ($\theta$, $\varphi$) und die Winkelbreite ($\alpha$) des Detektionsbereichs des Sensors definiert, wobei mindestens die Winkelbreiten aus dem oder den im Schritt d) identifizierten Bereich(en) von Interesse bestimmt werden, wobei die Erfassungssequenz im Schritt a) einer späteren Iteration des Verfahrens verwendet wird;

   wobei die im Schritt e) bestimmte Erfassungssequenz angepasst ist, um den oder die Bereiche von Interesse (ROI) oder deren Konturen entweder mit einer höheren räumlichen und/oder zeitlichen Auflösung als der Rest der Umgebung, oder mit einer geringeren räumlichen und/oder zeitlichen Auflösung als der Rest der Umgebung zu beproben.

2. Verfahren nach Anspruch 1 wobei im Schritt e) die Ausrichtungen des Detektionsbereichs (RD) des Sensors (CD) auch aus dem oder den im Schritt d) identifizierten Bereich(en) von Interesse (ROI) bestimmt werden.

3. Verfahren nach einem der vorstehenden Ansprüche, wobei der Schritt c) auch den Aufbau eines Bewegungsrasters aus einer Entwicklung im Zeitverlauf der Belegungswahrscheinlichkeiten der Zellen des Belegungsrasters umfasst, und der Schritt d) die Identifizierung mindestens eines Bereichs von Interesse (ROI) der Umgebung ebenfalls aus dem Bewegungsraster umfasst.

4. Verfahren nach einem der Ansprüche 1 oder 2 wobei der Sensor angepasst ist, um auch Geschwindigkeitsmessungen der physischen Körper bereitzustellen, wobei die Geschwindigkeitsmessungen vom Schritt d) zum Identifizieren mindestens eines Bereichs von Interesse (ROI) der Umgebung verwendet werden.

5. Verfahren nach einem der vorstehenden Ansprüche, wobei jedes inverse Sensormodell (MIN) ein diskretes Modell MQP, MQE ist, das jeder Zelle des entsprechenden Belegungsrasters ($GO_i$), und für jede Abstandsmessung ($MD_i$) eine Wahrscheinlichkeitsklasse zuordnet, die im Inneren einer gleichen fertigen Multiplizitätsanordnung ausgewählt wird, wobei jede Wahrscheinlichkeitsklasse durch einen ganzen Index identifiziert wird;
   und wobei im Schritt c) die Belegungswahrscheinlichkeit einer jeden Zelle des konsolidierten Belegungsrasters (GO) anhand von ganzen Berechnungen bestimmt wird, die auf den Indizes der im Schritt b) bestimmten Wahrscheinlichkeitsklassen durchgeführt werden.

6. Verfahren nach einem der vorstehenden Ansprüche, wobei das inverse Modell des Sensors (MIN) in einem Speicher in Form einer Datenstruktur abgelegt wird, die eine Vielzahl von Modellrastern genannten Rastern darstellen, die jeweiligen möglichen Abstandsmessungen und jeweiligen möglichen Winkelbreiten des Detektionsbereichs zugeordnet sind, wobei mindestens bestimmte Zellen eines Modellrasters einer Vielzahl von angrenzenden Zellen des Belegungsrasters entsprechen, die einem gleichen Winkelsektor aus einer Vielzahl von Winkelsektoren ($AS_1$ - $AS_4$) angehören, wobei der Detektionsbereich (RD) des Sensors (CD) unterteilt wird, und jeder dieser Zellen eine gleiche Belegungswahrscheinlichkeit zuordnet.

7. Verfahren nach einem der vorstehenden Ansprüche, wobei der Schritt c) den Aufbau des konsolidierten Belegungsrasters auch aus den von einem oder mehreren Hilfssensoren (CA) stammenden Abstandsmessungen beinhaltet.

8. System zur Wahrnehmung physischer Körper (CM), umfassend:

- mindestens einen Eingangsanschluss, um eine Vielzahl von Signalen zu empfangen, die repräsentativ für Abstandsmessungen ($MD_i$) der physischen Körpers sind, aus einem oder mehreren Sensoren;
- ein Datenverarbeitungsmodul (PR), das konfiguriert ist, um die Signale als Eingang zu empfangen und sie zu verwenden, um ein konsolidiertes Belegungsraster (GO) aufzubauen, und um eine Erfassungssequenz unter Anwendung des Verfahrens nach einem der Ansprüche 1 bis 7 zu bestimmen;
- einen ersten Ausgangsanschluss für ein Signal, das repräsentativ für das Belegungsraster (GO) oder des oder der Bereiche von Interesse (ROI) ist; und
- einen zweiten Ausgangsanschluss für ein Signal, das repräsentativ für die Erfassungssequenz ($\alpha$, $\theta$, $\varphi$) ist.

9. System nach Anspruch 8, das auch einen oder mehrere Abstandssensoren (CD) umfasst, die angepasst sind, um vom zweiten Ausgangsanschluss das Signal zu empfangen, das repräsentativ für die Erfassungssequenz ist, und um dem oder den Eingangsanschlüssen Signale bereitzustellen, die repräsentativ für eine Vielzahl von Abstandsmessungen physischer Körper sind.

10. System nach Anspruch 9, wobei der mindestens eine Abstandssensor vom Typ Radar, Lidar oder Sonar ist und ein System zur Bündelbildung umfasst, um die Ausrichtung und die Winkelbreite eines elektromagnetischen oder akustischen Strahlenbündels zu kontrollieren, das den Detektionsbereichs definiert.

**Claims**

1. A method for perceiving physical bodies (CM) in an environment, comprising the following steps, iteratively implemented by a computer or a dedicated digital electronic circuit (PR):

a) controlling a sensor (CD) in an acquisition sequence, with said sensor having a detection region (RD) that can be oriented in the environment in order to acquire a plurality of distance measurements (MDi) of said physical bodies;
b) applying, to each of said distance measurements, an inverse model (MIN) of the corresponding sensor on an occupancy grid (GOi) providing a discretized spatial representation of an environment of said sensor, in order to determine a probability of occupancy of a set of cells of said occupancy grid by a physical body; and
c) constructing a consolidated occupancy grid (GO), each cell of which has a probability of occupancy computed by Bayesian fusion of the probabilities of occupancy estimated during step b);

**characterized in that** the detection region of the sensor has a variable angular width ($\alpha$) and **in that** the method also comprises the following steps:

d) identifying, based on said occupancy grid, at least one region of interest (ROI) of the environment; and
e) determining one of said acquisition sequences defining, for each distance measurement, at least the orientation (0, $\varphi$) and the angular width ($\alpha$) of the detection region of the sensor, with at least the angular widths being determined based on the one or more regions of interest identified during step d), with said acquisition sequence being used during step a) of a subsequent iteration of the method; wherein the acquisition sequence determined during step e) is adapted to sample the one or more regions of interest (ROI) or their contours, either with a higher spatial and/or temporal resolution than the rest of the environment, or with a lower spatial and/or temporal resolution than the rest of the environment.

2. The method as claimed in claim 1, wherein, during step e), the orientations of the detection region (RD) of the sensor (CD) are also determined based on the one or more regions of interest (ROI) identified during step d).

3. The method as claimed in either of the preceding claims, wherein step c) also comprises constructing a movement grid based on a time evolution of the probabilities of occupancy of the cells of the occupancy grid, and step d) comprises identifying at least one region of interest (ROI) of the environment also based on the movement grid.

4. The method as claimed in either of claims 1 or 2, wherein the sensor is adapted to also provide speed measurements of the physical bodies, with said speed measurements being used by the step d) of identifying at least one region of interest (ROI) of the environment.

5. The method as claimed in any of the preceding claims, wherein each of said inverse sensor models (MIN) is a discrete model (MQP, MQE), associating each cell of the corresponding occupancy grid (GOi), and for each distance measurement (MDi), with a probability class selected within the same set of finite cardinality, with each of said probability classes being identified by an integer index, and wherein, during said step c), the probability of occupancy of each cell of the consolidated occupancy grid (GO) is determined by means of integer computations carried out on the indices of the probability classes determined during said step b).

6. The method as claimed in any of the preceding claims, wherein the inverse model of the sensor (MIN) is stored in a memory in the form of a data structure representing a plurality of grids, called model grids, associated with respective possible distance measurements and respective possible angular widths of the detection region, with at least some cells of a model grid corresponding to a plurality of contiguous cells of the occupancy grid belonging to the same angular sector from among a plurality of angular sectors (AS1-AS4) into which the detection region (RD) of the sensor (CD) is subdivided, and associating the same probability of occupancy with each of these cells.

7. The method as claimed in any of the preceding claims, wherein step c) comprises constructing the consolidated occupancy grid also based on distance measurements originating from one or more auxiliary sensors (CA).

8. A system for perceiving physical bodies (CM) comprising:

   - at least one input port for receiving a plurality of signals representing distance measurements (MDi) of said physical bodies originating from one or more sensors;
   - a data processing module (PR) configured to receive said signals as input and to use them to construct a consolidated occupancy grid (GO) and to determine an acquisition sequence by applying a method as claimed in any of claims 1 to 7;
   - a first output port for a signal representing the occupancy grid (GO) or the one or more regions of interest (ROI); and
   - a second output port for a signal representing the acquisition sequence ($\alpha$, $\theta$, $\varphi$).

9. The system as claimed in claim 8, further comprising one or more distance sensors (CD) adapted to receive said signal representing the acquisition sequence from said second output port and to provide said one or more input ports with signals representing a plurality of distance measurements of physical bodies.

10. The system as claimed in claim 9, wherein the or at least one distance sensor is of the radar, Lidar, or sonar type and comprises a beamforming system for controlling the orientation and the angular width of an electromagnetic or acoustic radiation beam defining the detection region.

Fig. 1

$\rho(z \mid d)$

Fig. 2

Fig. 3

Fig. 4

P(o|z)

Fig. 5

Fig. 6

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3364213 A
- WO 2017050890 A
- EP 3594719 A
- US 10598788 B
- WO 2019216937 A

**Littérature non-brevet citée dans la description**

- **A. ELFES**. Occupancy grids: a stochastic spatial representation for active robot perception. *Sixth Conference on Uncertainty in AI*, 1990